# DEMANDE DE BREVET EUROPEEN

(11) **EP 0 610 907 A1**
(43) Date de publication de la demande: **17.08.1994**
(21) Numéro de dépôt: 94101970.5
(22) Date de dépôt: 09.02.1994
(51) Int. Cl.: H02J 13/00, H04L 12/28, G05B 19/04

(54) **Procédé de création d'une famille d'unités de communication autonome**

(30) Priorité: 12.02.1993 FR 9301625
(71) Demandeur: MOULINEX S.A., F-93170 Bagnolet (FR)
(72) Inventeur: Letorey, Joseph Arthur Philippe Marie, F-14390 Varaville (FR); Parise, Vital André, F-14400 Arganchy (FR); Leveque, Patrick Michel Guy, F-50000 Saint Lo (FR)
(74) Mandataire: May, Hans Ulrich, Dr.

(57) **Abrégé**

1. Procédé de création d'une famille autonome d'unités de communication dialoguant par des moyens de transmission d'information tels que, par exemple, des courants porteurs appliqués à un réseau de distribution électrique, ladite famille comprenant au moins une régie maître et au moins une unité esclave.
Selon l'invention, lors de la mise sous tension de ladite régie maître, celle-ci envoie un message d'interrogation sur le réseau; se met pendant un temps déterminé à l'écoute d'un message de réponse éventuel d'au moins une autre régie homologue, reliée au même réseau et adaptée à transmettre un message de réponse; établit en fonction de la réponse éventuelle de la centrale tierce un numéro de code exclusif appelé numéro d'adresse maison, susceptible d'être transmis à toutes les unités de communication constituant la famille, et constituant un signe distinctif singularisant ladite famille.
Ce procédé s'applique au domaine de la domotique pour la commande d'appareils ménagers.

## Description

L'invention se rapporte à un procédé de création d'une famille autonome d'unités de communication dialoguant par des moyens de transmission d'information tels que, par exemple, des courants porteurs appliqués à un réseau de distribution électrique, ladite famille comprenant au moins une unité centrale dite régie maître et au moins une unité de communication dite esclave.

On assiste à l'heure actuelle à un développement important de systèmes de communication entre une unité de contrôle et des unités généralement appelées esclaves qui conditionnent le fonctionnement de divers appareils ou de différents organes d'un appareil. Le développement de tels systèmes est particulièrement sensible dans le domaine de la Domotique.

Dans beaucoup de réseaux de domotique connus, pour commander le fonctionnement d'un appareil domestique relié à une unité esclave, une régie maître envoie à cette unité esclave un signal d'information véhiculé par le réseau de distribution électrique et sous la forme d'un courant porteur.

Un des principaux problèmes rencontré dans ces applications est dû à l'interférence entre différentes unités de communication appartenant à des groupes ou des familles différents. Tel serait par exemple le cas d'une régie maître qui commanderait les esclaves installés dans une habitation voisine.

Pour se soustraire à cette fâcheuse éventualité , sur certains dispositifs, il est possible à l'utilisateur de sélectionner un canal de communication particulier.

Cette solution accuse rapidement ses limites et se révèle inefficace lorsqu'un parc important de régies maîtres est relié au même réseau. Effectivement la sélection d'un canal se fait nécessairement parmi un éventail limité de possibilités et surtout, l'utilisateur n'a aucune information sur le canal utilisé par les régies maîtres fonctionnant déjà sur le réseau. De surcroît, le choix d'un canal ne constitue pas une exclusivité et n'interdit pas de façon absolue l'éventualité d'interférences.

Le but de l'invention est d'apporter une solution fiable et une mise en oeuvre aisée au problème des interférences entre unités de communication et de singulariser des familles autonomes d'unités de communication.

Selon l'invention, lors de la mise sous tension de ladite régie maître, celle-ci envoie un message d'interrogation sur le réseau de distribution; se met pendant un temps déterminé à l'écoute d'un message de réponse éventuel d'au moins une autre régie maître homologue, dite tierce, reliée au même réseau de distribution et adaptée à transmettre un message de réponse; établit dans le cas d'une réponse éventuelle de la régie tierce un numéro de code exclusif appelé numéro d'adresse maison autre que celui de la régie tierce, ledit numéro d'adresse maison étant susceptible d'être transmis à toutes les unités de communication constituant la famille autonome, et constituant un signe distinctif singularisant ladite famille.
Grâce à l'invention il est possible de configurer les unités de communication de manière à réaliser une famille autonome indépendante des autres unités dialoguant sur le même réseau de communication.

Les caractéristiques et avantages de l'invention ressortiront d'ailleurs de la description qui va suivre, prise à titre d'exemple non limitatif, en référence aux dessins annexés dans lesquels :

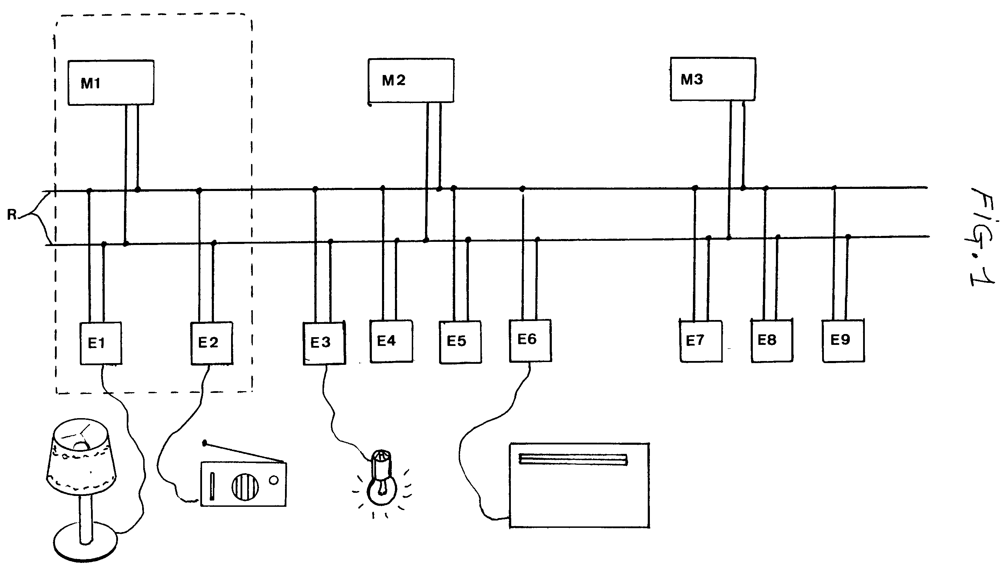

- la figure 1 est une vue schématique d'un réseau de communication domotique appliquant un procédé de création d'une famille autonome selon l'invention;
- la figure 2 et la figure 3 sont des organigrammes de différentes variantes du procédé de l'invention.

Le procédé selon l'invention est destiné à la création d'une famille autonome d'unités de communication dialoguant par des moyens de transmission d'information tels que, par exemple, des courants porteurs appliqués à un réseau de distribution électrique, ladite famille comprenant au moins une unité centrale dite régie maître et au moins une unité de communication dite esclave.

Tel que schématisé sur la figure un réseau de distribution R peut être relié à plusieurs unités de communication dont des régies maîtres M1,M2,M3... et des esclaves E1,E2,E3... A chaque régie maître M est associé une ou plusieurs unités esclaves E auxquels sont reliés des appareils ménagers dont ils contrôlent le fonctionnement.

L'ensemble constitué d'une régie maître et des esclaves qui lui sont associés constitue une famille dont le fonctionnement doit être autonome et surtout indifférent du fonctionnement des autres familles reliées au même réseau de transmission d'information. Par exemple lorsque deux habitations voisines reliées sur la même phase du réseau de distribution électrique sont chacune équipées d'un ensemble de gestion domotique des appareils électriques, comprenant une régie maître et des unités esclaves, l'installation de chaque habitation constitue une famille. La nécessité d'interdire toute interaction ou interférence du fonctionnement des appareils de chaque famille s'impose à l'évidence.

Selon l'invention, lors de la mise sous tension de ladite régie maître, celle-ci envoie un message d'interrogation sur le réseau de distribution; se met pendant un temps déterminé à l'écoute d'un message de réponse éventuel d'au moins une autre régie maître homologue, dite tierce, reliée au même réseau de distribution et adaptée à transmettre un message de réponse; établit dans le cas d'une réponse éventuelle de la régie tierce un numéro de code exclusif appelé numéro d'adresse maison autre que celui de la régie tierce, ledit numéro d'adresse maison étant susceptible d'être transmis à toutes les unités de communication constituant la famille autonome, et constituant un signe distinctif singularisant ladite famille.

Cette opération d'attribution d'une adresse maison peut se réaliser selon plusieurs variantes.

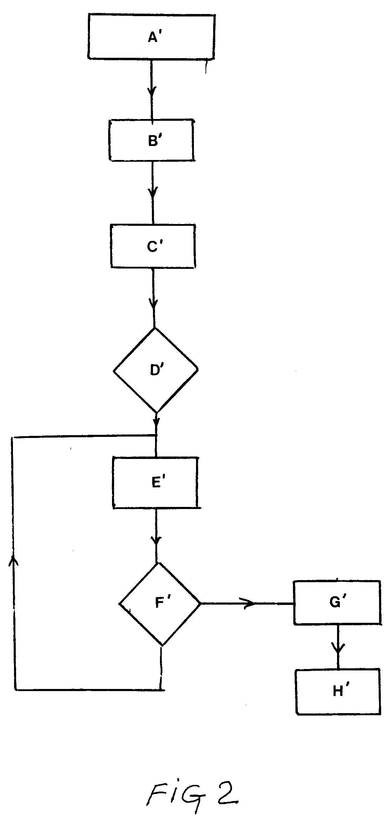

Selon une première version, le message de réponse comprend des informations relatives au numéro d'adresse maison utilisé par la régie tierce, et la régie maître choisit un numéro de code d'adresse maison différent de celui communiqué par la régie tierce.
Ce choix peut lui-même être réalisé de différentes manières: la régie maître peut, par exemple, choisir un numéro de code dans une table contenue dans une mémoire, mais de façon préférée, la régie maître choisit un numéro aléatoire, le compare au numéro d'adresse communiqué par la régie tierce, et soit le retient comme numéro d'adresse maison, lorsqu'il est différent du numéro d'adresse maison de la régie tierce ou lorsque aucune réponse de régie tierce n'est parvenue à la régie maître, soit procède à un nouveau choix de numéro aléatoire et réitère le processus.
Cette première version de l'attribution d'une adresse maison est représentée schématiquement à la figure 2 où A' correspond à la mise sous tension d'une régie maître M1. La régie maître M1 émet une trame de recherche d'adresse maison B' sur le réseau R Cette trame est une suite cohérente de bits d'information susceptible d'être comprise par des régies maîtres du même type que la régie maître émettant la trame. Pendant l'écoulement d'une temporisation C', par exemples 5 secondes, la régie maître se met à l'écoute d'éventuelles régies maîtres tierces M2, M3... qui suite à la trame de recherche d'adresse transmettent leur numéro d'adresse maison D'. Une fois ce temps écoulé, la régie maître choisit un numéro de code aléatoire E' et procède à une comparaison F' de ce numéro de code aux numéros d'adresse maison qui lui ont éventuellement été communiques par les régies tierces M2, M3... Si le numéro aléatoire ne coïncide pas avec un numéro d'adresse maison, la régie maître retient ce numéro de code qui devient son propre numéro d'adresse maison G' et transmet ce numéro dans une dernière étape H' aux esclaves qu'elle contrôle. Si par contre il y a une coïncidence entre le numéro aléatoire et un numéro d'adresse maison d'une autre régie maître M2, M3. La régie maître M1 choisit un autre numéro aléatoire E' et procède à une nouvelle comparaison F'.

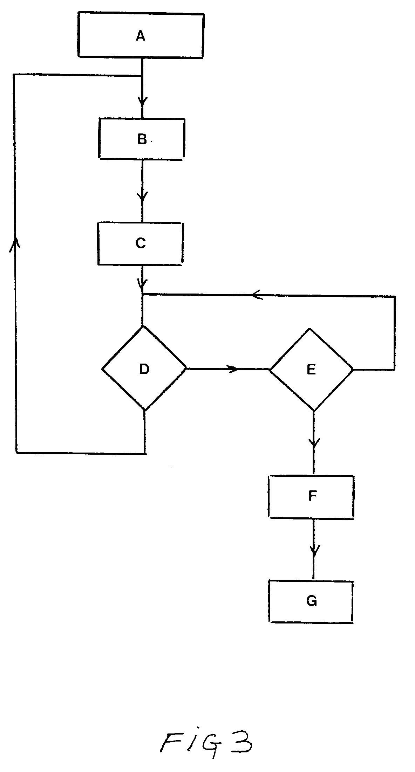

Une seconde version plus simple est illustrée à la figure 3. Lors de la mise sous tension A d'une régie maître M1, celle ci choisit un numéro de code aléatoire B, transmet sur le réseau R une trame C comprenant le numéro de code aléatoire. Lorsque d'éventuelles régies tierces homologues M2, M3... déjà installées sur le réseau reçoivent cette trame, elles comparent le numéro de code contenu dans la trame avec leur propre numéro d'adresse maison et émettent une information d'indisponibilité du numéro si la comparaison révèle une coïncidence. Si la régie maître reçoit en D un tel message d'indisponibilité , elle choisit un nouveau numéro de code aléatoire B et réitère le processus. Si après l'écoulement d'une temporisation E , par exemple de 5 secondes aucun message d'indisponibilité n'est parvenu à la régie maître celle ci retient le numéro de code choisi qui devient son propre numéro d'adresse maison F et le transmet dans une dernière étape G aux esclaves qui lui sont attribués.

Cette seconde version correspond plus généralement à un procédé selon lequel la régie maître choisit un numéro de code aléatoire, introduit une information relative à ce numéro dans le message d'interrogation; la régie homologue tierce entreprend, lors de la réception de ce message, une étape de comparaison du numéro de code aléatoire à son numéro d'adresse maison et transmet une information de non disponibilité du code si la comparaison révèle une coïncidence; et la régie maître, soit réitère le processus par le choix d'un nouveau numéro de code aléatoire, lorsqu'elle reçoit une information de non disponibilité, soit, lorsqu'elle ne reçoit pas une telle information, retient le numéro de code qui devient le numéro d'adresse maison.

Selon une alternative, la régie dite tierce transmet une information de disponibilité lorsque l'étape de comparaison ne révèle pas de coïncidence entre le numéro aléatoire et le numéro de code maison, et la régie maître retient le numéro de code qui devient un numéro d'adresse maison, lorsqu'elle reçoit une information de disponibilité. Cette possibilité, bien que paraissant plus rationnelle est néanmoins moins bien adaptée à un parc d'unités de communication très fourni dans la mesure où beaucoup d'unités risquent d'émettre simultanément un message de disponibilité.

Finalement il est possible grâce à l'invention de créer des familles autonomes d'unités de communication et de contrôle du fonctionnement des appareils électriques domestiques. De plus le nombre de ces familles peut être pratiquement illimité.

## Revendications

1. Procédé de création d'une famille autonome d'unités de communication dialoguant par des moyens de transmission d'information tels que, par exemple, des courants porteurs appliqués à un réseau de distribution électrique, ladite famille comprenant au moins une unité centrale dite régie maître et au moins une unité de communication dite esclave,
**caractérisé en ce que** lors de la mise sous tension de ladite régie maître, celle-ci envoie un message d'interrogation sur le réseau de distribution; se met pendant un temps déterminé à l'écoute d'un message de réponse éventuel d'au moins une autre régie maître homologue, dite tierce, reliée au même réseau de distribution et adaptée à transmettre un message de réponse; établit dans le cas d'une réponse éventuelle de la régie tierce un numéro de code exclusif appelé numéro d'adresse maison autre que celui de la régie tierce, ledit numéro d'adresse maison étant susceptible d'être transmis à toutes les unités de communication constituant la famille autonome, et constituant un signe distinctif singularisant ladite famille.

2. Procédé de création selon la revendication 1,
**caractérisé en ce que** le message de réponse comprend des informations relatives au numéro d'adresse maison utilisé par la régie tierce, et la régie maître choisit un numéro de code d'adresse maison différent de celui communiqué par la régie tierce.

3. Procédé de création selon la revendication 1,
**caractérisé en ce que** la régie maître choisit un numéro de code aléatoire, introduit une information relative à ce numéro dans le message d'interrogation; la régie homologue tierce entreprend, lors de la réception de ce message, une étape de comparaison du numéro de code aléatoire à son numéro d'adresse maison et transmet une information de non disponibilité du code si la comparaison révèle une coïncidence; et la régie maître, soit réitère le processus par le choix d'un nouveau numéro de code aléatoire, lorsqu'elle reçoit une information de non disponibilité, soit, lorsqu'elle ne reçoit pas une telle information, retient le numéro de code qui devient le numéro d'adresse maison.

4. Procédé de création selon la revendication 3,
**caractérisé en ce que** la régie dite tierce transmet une information de disponibilité lorsque l'étape de comparaison ne révèle pas de coïncidence entre le numéro aléatoire et le numéro de code maison, et la régie maître retient le numéro de code qui devient un numéro d'adresse maison, lorsqu'elle reçoit une information de disponibilité.

5. Procédé de création selon la revendication 2,
**caractérisé en ce que** la régie maître choisit un numéro de code d'adresse maison dans une table contenue dans une mémoire.

6. Procédé de création selon la revendication 2,
**caractérisé en ce que** la régie maître choisit un numéro de code aléatoire, le compare au numéro d'adresse communiqué par la régie tierce, et soit le retient comme numéro d'adresse maison, lorsqu'il est différent du numéro d'adresse maison de la régie tierce ou lorsque aucune réponse de la régie tierce n'est parvenue à la régie maître, soit procède à un nouveau choix de numéro aléatoire et réitère le processus.
